# EUROPEAN PATENT SPECIFICATION

(11) **EP 4 546 765 B1**
(45) Date of publication and mention of the grant of the patent: **02.09.2026**
(21) Application number: 25164318.5
(22) Date of filing: 13.02.2019
(51) Int. Cl.: H04M 1/72412, A24F 40/50, A24F 40/53, H04M 1/72403, A24F 40/10, A24F 40/65

(54) **SMOKING SUBSTITUTE DEVICE**
RAUCHERSATZVORRICHTUNG
DISPOSITIF DE SUBSTITUTION DU TABAC

(30) Priority: 26.02.2018 GB 201803025
(43) Date of publication of application: 30.04.2025
(62) Document number(s) of the earlier application(s) in accordance with Art. 76 EPC: 19704814.3 / 3 759 900
(73) Proprietor: Imperial Tobacco Limited, Bristol BS3 2LL (GB)
(72) Inventor: FARD, Daniel, Bristol, BS3 2LL (GB); TALBOT, Oliver, Bristol, BS3 2LL (GB)
(74) Representative: Mewburn Ellis LLP

(56) References cited:
- WO-A1-2017/055793
- US-A1- 2013 319 439
- US-A1- 2014 246 035
- US-A1- 2015 181 945
- US-A1- 2018 043 114

## Description

### Field of the Invention

The present invention relates to smoking substitute devices, and particularly, although not exclusively, to providing a recommended configuration to a smoking substitute device based on the usage of the smoking substitute device.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices, which may also be known as electronic nicotine delivery systems, may comprise electronic systems that permit a user to simulate the act of smoking by producing an aerosol, also referred to as a "vapour", which is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu^{™} e-cigarette. The myblu^{™} e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO^{™} e-cigarette. The blu PRO^{™} e-cigarette is an open system device which includes a main body, a (refillable) tank, and a mouthpiece. The main body and tank are physically and electrically coupled together by screwing one to the other. The mouthpiece and refillable tank are physically coupled together by screwing one into the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute device is the so-called "heat not burn" ("HNB") approach in which tobacco (rather than e-liquid) is heated or warmed to release vapour. The tobacco may be leaf tobacco or reconstituted tobacco. The vapour may contain nicotine and/or flavourings. In the HNB approach the intention is that the tobacco is heated but not burned, i.e. does not undergo combustion.

A typical HNB smoking substitute device may include a main body and a consumable. The consumable may include the tobacco material. The main body and consumable may be configured to be physically coupled together. In use, heat may be imparted to the tobacco material by a heating device that is typically located in the main body, wherein airflow through the tobacco material causes moisture in the tobacco material to be released as vapour. A vapour may be formed from a carrier in the tobacco material (this carrier may for example include propylene glycol and/or vegetable glycerin) and additionally volatile compounds released from the tobacco. The released vapour may be entrained in the airflow drawn through the tobacco.

As the vapour passes through the smoking substitute device (entrained in the airflow) from an inlet to a mouthpiece (outlet), the vapour cools and condenses to form an aerosol (also referred to as a vapour) for inhalation by the user. The aerosol will normally contain the volatile compounds.

In HNB smoking substitute devices, heating as opposed to burning the tobacco material is believed to cause fewer, or smaller quantities, of the more harmful compounds ordinarily produced during smoking. Consequently, the HNB approach may reduce the odour and/or health risks that can arise through the burning, combustion and pyrolytic degradation of tobacco.

An example of the HNB approach is the IQOS^{®} smoking substitute device from Philip Morris Ltd. The IQOS^{®} smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HNB approach is the device known as "Glo"^{®} from British American Tobacco p.l.c. Glo^{®} comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

Moreover, most smoking substitute devices currently on the market are 'single configuration' devices where it is not possible or, at the moment, incredibly difficult to alter the configuration of the device based on a user's preferences.

US 2018/043114 A1 discloses a device in communication with a vaporizer, which can include one or more features related to control of functions and/or features of the vaporizer, identification of a cartridge and/or a vaporizable material in the cartridge and data exchange (either one-way or two-way) between a cartridge and a vaporizer with which the cartridge is engaged.

WO 2017/055793 A1 discloses an electronic vapour provision system comprising a control unit and a controller, which is configured to maintain a model of power consumption and to predict from the model whether an estimated power consumption will discharge down to a threshold level of charge before an estimated next recharging time, and if so, perform a user notification and/or mitigation action.

The present invention has been devised in light of the above considerations.

### Summary of the Invention

As its most general, the invention provides a method of modifying the configuration of a smoking substitute device based on its usage pattern so as to improve the user's experience.

Accordingly, in a first aspect, the invention provides a computer implemented method for adapting a configuration of a smoking substitute device, as defined in independent claim 1.

Such a method can substantially enhance a user's experience of the smoking substitute device, by ensuring that it is configured in a way which corresponds to their particular use.

The one or more usage parameter(s) may be transmitted from the smoking substitute device to an application installed on a mobile device, said application assessing the one or more usage parameter(s) to derive the recommended configuration.

The one or more usage parameter(s) may be transmitted from the smoking substitute device to a remote server, said remote server assessing the one or more usage parameter(s) to derive the recommended configuration.

Implementing the recommended configuration may include changing one or more values in a memory of the smoking substitute device.

The derivation of the recommended configuration may be performed so as to adapt the smoking substitute device in a manner which enhances a user's experience of the device.

The one or more usage parameter(s) may include at least one of:
a total usage time of the device within a given time period;
a battery level;
an indication of the number of times the smoking substitute device is used within a given time period;
an indication of how heavily a user draws on the smoking substitute device; and
an indication of the number of times a consumable is inserted or removed from the smoking substitute device.

Implementing the recommended configuration of the smoking substitute device may include setting a power level of a heater in the smoking substitute device.

Implementing the recommended configuration of the smoking substitute device may include altering one or more settings of the smoking substitute device from the list:
a power provided to a heater of the smoking substitute device;
a power profile over an inhalation period; and
a power profile associated with a class of consumables.

The method of may further including the steps, implemented on the smoking substitute device, of:
obtaining an identifier of a consumable connected to the smoking substitute device;
determining, using the identifier, an associated recommended configuration of the smoking substitute device stored within memory of the smoking substitute device; and
implementing the associated recommended configuration on the smoking substitute device.

The method may further comprising the steps, implemented on the smoking substitute device, of:
obtaining an identifier of a consumable connected to the smoking substitute device;
determining, using the identifier, that there is no associated recommended configuration of the smoking substitute device stored within memory of the smoking substitute device; and
implementing a default mode configuration on the smoking substitute device.

Assessing the one or more usage parameters may include comparing the one or more usage parameters to a plurality of stored example usage parameters, and identifying a type of user of the device from said comparison, and deriving the recommended configuration of the smoking substitute device may be performed by selecting a corresponding recommended configuration associated with the identified type of user.

In a second aspect, the invention provides a smoking substitute device, as defined in independent claim 12.

Such a smoking substitute device can substantially enhance a user's experience of the smoking substitute device, by ensuring that it is configured in a way which corresponds to their particular use.

In a third aspect, the invention provides a mobile device, as defined in independent claim 13.

Such a mobile device can substantially enhance a user's experience of the smoking substitute device, by ensuring that it is configured in a way which corresponds to their particular use.

In a fourth aspect, the invention provides a remote server comprising a processor and memory, as defined in independent claim 14.

Such a remote server can substantially enhance a user's experience of the smoking substitute device, by ensuring that it is configured in a way which corresponds to their particular use.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows an example system for managing a smoking substitute device;
**Figure 2(a)** shows an example smoking substitute device for use as the smoking substitute device in the system of Fig. 1;
**Figure 2(b)** shows the main body of the smoking substitute device of Fig. 2(a) without the consumable;
**Figure 2(c)** shows the consumable of the smoking substitute device of Fig. 2(a) without the main body;
**Figure 3(a)** is a schematic view of the main body of the smoking substitute device of Fig. 2(a);
**Figure 3(b)** is a schematic view of the consumable of the smoking substitute device of Fig. 2(a);
**Figure 4** is a network flow diagram illustrating a method according to the present invention; and
**Figure 5** is a flow chart illustrating a sub-method according to the present invention.

### Detailed Description of the Invention

Aspects and embodiments of the present invention will now be discussed with reference to the accompanying figures. Further aspects and embodiments will be apparent to those skilled in the art.

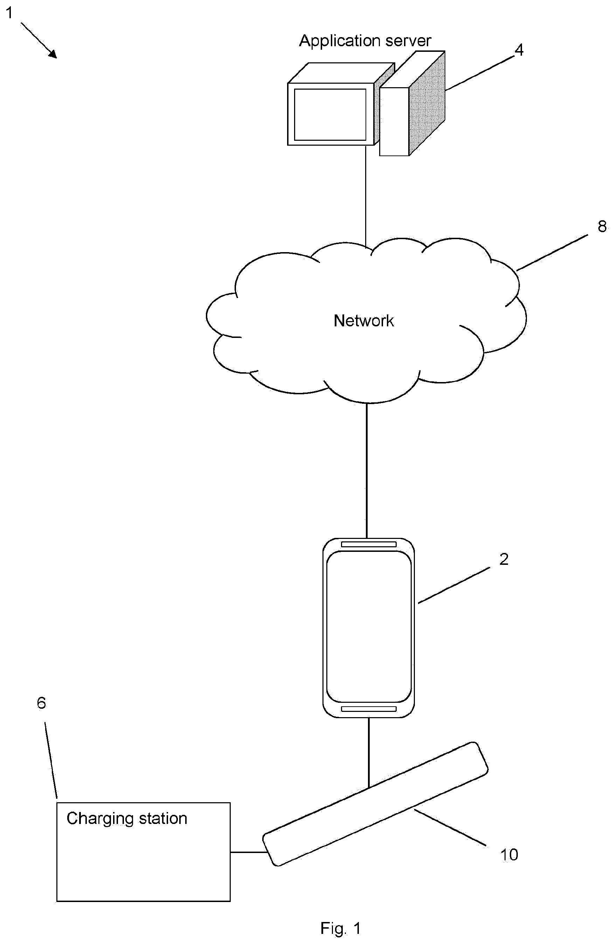

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth^{®}, with an application (or "app") installed on the mobile device 2, e.g. via a suitable wireless interface (not shown) on the mobile device 2. The smoking substitute device 10 may, in some examples, be configured to communicate wirelessly with the application server directly (i.e. not via mobile device 2). The mobile device 2 may be a mobile phone, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi^{®} network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

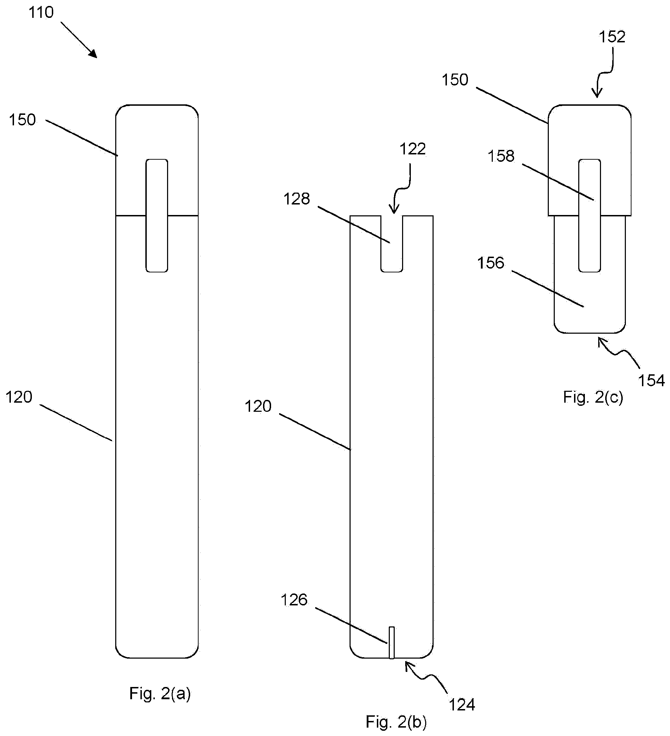

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120. In other examples, the main body 120 and the consumable could be physically coupled together by screwing one onto the other, or through a bayonet fitting, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

The tank 156 may be referred to as a "clearomizer" if it includes a window 158, or a "cartomizer" if it does not.

The consumable 150 may identify itself to the main body 120, via an electrical interface, RFID chip, or barcode.

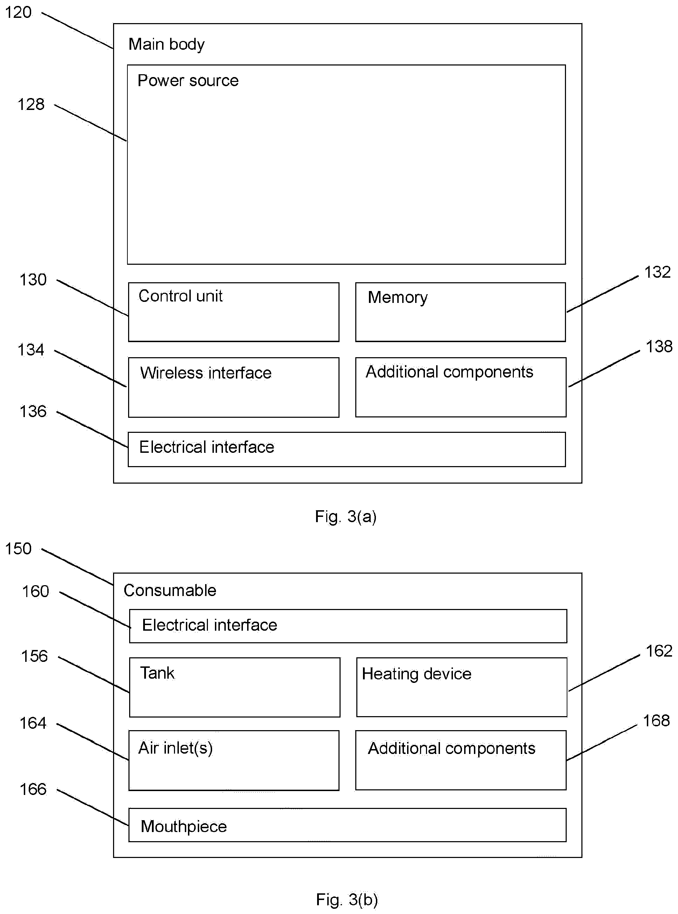

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory. The memory may include instructions which, when implemented, cause the control unit 130 to perform certain tasks or steps of a method.

The wireless interface 134 is preferably configured to communicate wirelessly with the mobile device 2, e.g. via Bluetooth^{®}. To this end, the wireless interface 134 could include a Bluetooth^{®} antenna. Other wireless communication interfaces, e.g. WiFi^{®}, are also possible. As discussed above, the wireless interface 134 may be configured to communicate wirelessly with the remote server 2.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6. The electrical interface 136 may also be used to identify the consumable 150 from a list of known consumables. For example, the consumable may be a particular flavour and/or have a certain concentration of nicotine. This can be identified to the control unit 130 of the main body 120 when the consumable is connected to the main body. Additionally, or alternatively, there may be a separate communication interface provided in the main body 120 and a corresponding communication interface in the consumable 150 such that, when connected, the consumable can identify itself to the main body 120.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example). The airflow sensor can be used to determine, for example, how heavily a user draws on the mouthpiece or how many times a user draws on the mouthpiece in a particular time period.

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

As an example of one of the one or more additional components 168, an interface for obtaining an identifier of the consumable may be provided. As discussed above, this interface may be, for example, an RFID reader, a barcode or QR code reader, or an electronic interface which is able to identify the consumable to the main body. The consumable may, therefore include any one or more of an RFID chip, a barcode or QR code, or memory within which is an identifier and which can be interrogated via the electronic interface in the main body.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS^{®} smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO^{™} e-cigarette discussed above.

As another example, an entirely disposable (one use) smoking substitute device could be used as the smoking substitute device 10 of Fig. 1, instead of the smoking substitute device 110.

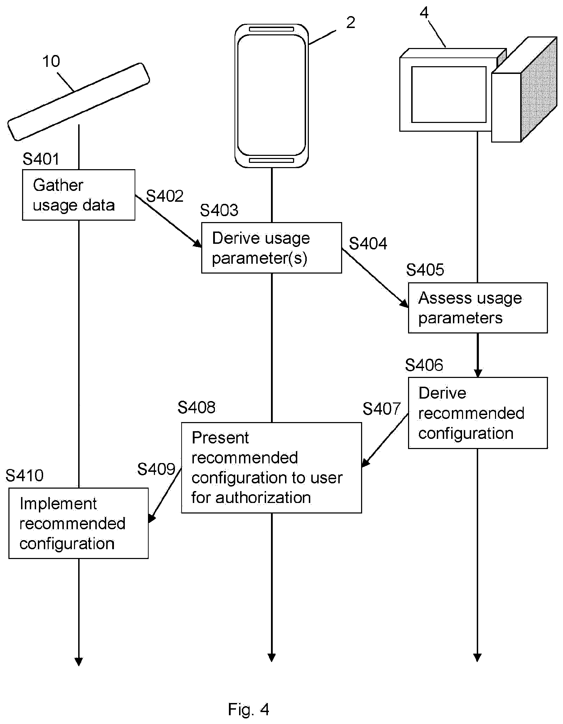

Figure 4 illustrates a method according to the present invention. The figure is a data flow diagram, where time is presented along the long (vertical) axis.

In a first step, S401, usage data is gathered by the smoking substitute device 10. As has been discussed previously, this usage data can be gathered in many different ways. For example, the control unit 130 may be configured to note and store in memory 132 the number of times the smoking substitute device 10 is used within a predetermined time period e.g. 1 hour, 12 hours, etc. Additionally, or alternatively, the control unit 130 may be configured to record the power remaining in power source 128 at different times during a given time period, e.g. a day.

In this embodiment, in step S402, the gathered usage data is transmitted to the mobile device 2. Subsequent to this, in step S403, the mobile device derives the one or more usage parameter(s). Alternatively, the usage parameter(s) may be derived by the smoking substitute device itself. The usage parameter(s) may be a processed form of the usage data, e.g. ordered temporally or linked to the smoking substitute device which gathered the usage data. In some embodiments, the usage parameter(s) may be essentially the same as the gathered usage data.

After the usage parameter(s) have been derived, either by the mobile device 2 or by smoking substitute device 10, they are transmitted to remote server 4. In the embodiment shown in Figure 4, the mobile device transmits the usage parameters in step S404 to the remote server.

After receipt of the usage parameters, and in step S405, the remote server 4 assess them. By assessing, it may be meant that the remote server ascribes a user type based on the usage data. Two examples as discussed below:

### Example 1:

In this example, which is useful for understanding the present invention, the usage parameter(s) indicate that the device runs low on battery before a time when the user normally charges the device.

### Example 2:

In this example, which is in accordance with the claimed invention, the usage parameter(s) indicate that the user draws very heavily on the device.

After assessing the one or more usage parameter(s) in step S405, the remote server derives a recommended configuration of the smoking substitute device in step S406. Again, relating these to the examples discussed above:

### Example 1:

The recommended configuration in this instance may be to change a voltage of a heater in the device, or to change it to a more economical mode in some other way, so that the battery will last longer.

### Example 2:

The recommended configuration in this instance may be to increase the voltage of the heater in the device, so that more nicotine is delivered per inhalation and therefore the user is not required to draw so heavily.

Whilst, in the embodiment above, the remote server 4 has assessed the usage parameters and derived the recommended configuration, in some embodiments either the smoking substitute device itself can assess and derive or the mobile device can assess and derive.

In the illustrated embodiment, after the recommended configuration has been derived it is transmitted, in step S406 to the mobile device. This allows the mobile device to implement step S408, where the recommended configuration is presented to the user for authorization. This presentation can be undertaken by, for example, an application installed on the mobile device which presents information relating to the recommended configuration and requests that the user either authorise or deny the implementation of the recommended configuration.

Whilst in this embodiment the mobile device 2 presents the recommended configuration, in some embodiments the recommended configuration may be presented by the smoking substitute device itself either visually or audibly.

When the user authorises the implementation of the recommended configuration, the recommended configuration is then transmitted to the smoking substitute device in step S409. Subsequently, the recommended configuration is then implemented on the smoking substitute device in step 410.

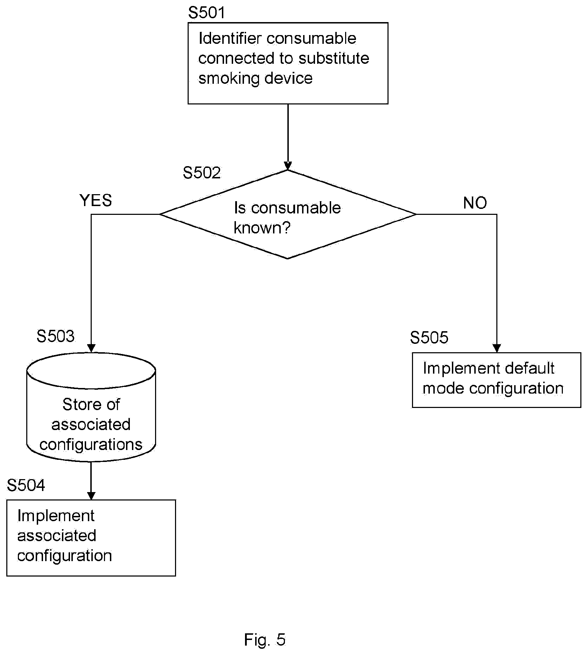

Figure 5 illustrates a method according to embodiments of the present invention. In step S501, a processor either in the smoking substitute device 10 or in the mobile device 2, identifies a consumable connected to the smoking substitute device. By consumable, it is meant a pod as described above e.g. a cartomizer or clearomizer. The consumable may be identified by any one or more of: a processor within the consumable which communicates with a processor in either the smoking substitute device or the mobile device; an RFID chip within the consumable which is read by a corresponding reader in either the smoking substitute device or the mobile device; or a barcode, which is optically read by a corresponding reader in either the smoking substitute device or the mobile device.

After the consumable identifier has been ascertained, the processor in either the smoking substitute device or the mobile device determines, in step S502, whether that consumable is known to the processor. By known, it is meant that the processor identifies whether a recommended configuration is already associated with the consumable identified. This may involve checking a database of consumables which have associated recommended configurations.

If the consumable is known to the processor, 'YES', then in step S503 a store of associated configurations is interrogated so as to identify the recommended configuration associated with the consumable currently connected to the smoking substitute device. This may be the last configuration used with that type of consumable in the smoking substitute device, or a pre-programmed configuration for that type of consumable which is set up in the store of configurations when the device is manufactured. In subsequent step S504, the associated configuration which has been identified based on the identity of the consumable is implemented on the smoking substitute device.

If the consumable is not known to the processor, 'NO', then in step S505 a default mode configuration is implemented. By default mode configuration, it may be meant values known to work for all consumables compatible with the smoking substitute device are implemented. Whilst these may not be optimal from a user's perspective, e.g. not enough nicotine delivered per inhalation, they ensure that the consumable is not damaged by applying a configuration of the smoking substitute device which is not suitable therefor. The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

Throughout this specification, including the claims which follow, unless the context requires otherwise, the word "connect" and "connected" should be understood to express a networked connection between one device and another which is can be either direct or indirect (via intermediary).

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the adverb "about," it will be understood that the particular value forms another embodiment. The term "about" in relation to a numerical value is optional and means for example +/- 10%.

## Claims

1. A computer implemented method for adapting a configuration of a smoking substitute device (10, 110), which includes the steps of:
monitoring the usage of the smoking substitute device (10, 110), and deriving from the monitored usage one or more usage parameter(s) associated with the use of the smoking substitute device (10, 110);
assessing the one or more usage parameter(s) to derive, based on the one or more usage parameter(s), a recommended configuration of the smoking substitute device (10, 110);
presenting to a user of the smoking substitute device (10, 110) the recommended configuration of the smoking substitute device (10, 110) for authorisation prior to implementing the recommended configuration on the smoking substitute device (10, 110), wherein the one or more usage parameter(s) indicate that the user has drawn very heavily on the smoking substitute device (10, 110), and the recommended configuration includes increasing the voltage of the heater so that more nicotine is delivered per inhalation; and
upon the user authorising the recommended configuration, implementing the recommended configuration on the smoking substitute device (10, 110).

2. The method of claim 1, wherein the one or more usage parameter(s) are transmitted from the smoking substitute device (10, 110) to an application installed on a mobile device (2), said application assessing the one or more usage parameter(s) to derive the recommended configuration.

3. The method of claim 1, wherein the one or more usage parameter(s) are transmitted from the smoking substitute device (10, 110) to a remote server (4), said remote server (4) assessing the one or more usage parameter(s) to derive the recommended configuration.

4. The method of any preceding claim, wherein implementing the recommended configuration includes changing one or more values in a memory (132) of the smoking substitute device (10, 110).

5. The method of any preceding claim, wherein the derivation of the recommended configuration is performed so as to adapt the smoking substitute device (10, 110) in a manner which enhances a user's experience of the device (10, 110).

6. The method of any preceding claim, wherein the one or more usage parameter(s) include at least one of:
a total usage time of the device (10, 110) within a given time period;
a battery level;
an indication of the number of times the smoking substitute device (10, 110) is used within a given time period;
an indication of the number of times a consumable (150) is inserted or removed from the smoking substitute device (10, 110).

7. The method of any preceding claim, wherein implementing the recommended configuration of the smoking substitute device (10, 110) includes setting a power level of a heater in the smoking substitute device (10, 110).

8. The method of any preceding claim, wherein implementing the recommended configuration of the smoking substitute device (10, 110) includes altering one or more settings of the smoking substitute device (10, 110) from the list:
a power provided to a heater of the smoking substitute device (10, 110);
a power profile over an inhalation period; and
a power profile associated with a class of consumables (150).

9. The method of any preceding claim, further including the steps, implemented on the smoking substitute device (10, 110), of:
obtaining an identifier of a consumable (150) connected to the smoking substitute device (10, 110);
determining, using the identifier, an associated recommended configuration of the smoking substitute device (10, 110) stored within memory (132) of the smoking substitute device (10, 110); and
implementing the associated recommended configuration on the smoking substitute device (10, 110).

10. The method of any of preceding claim, further comprising the steps, implemented on the smoking substitute device (10,110), of:
obtaining an identifier of a consumable connected to the smoking substitute device (10, 110);
determining, using the identifier, that there is no associated recommended configuration of the smoking substitute device (10, 110) stored within memory (132) of the smoking substitute device (10, 110); and
implementing a default mode configuration on the smoking substitute device (10, 110).

11. The method of any preceding claim, wherein
assessing the one or more usage parameters includes comparing the one or more usage parameters to a plurality of stored example usage parameters, and identifying a type of user of the device (10, 110) from said comparison, and
deriving the recommended configuration of the smoking substitute device (10, 110) is performed by selecting a corresponding recommended configuration associated with the identified type of user.

12. A smoking substitute device (10, 110), comprising a processor and memory (132), the memory (132) containing instructions which cause the processor to:
monitor the usage of the smoking substitute device (10, 110), and derive from the monitored usage one or more usage parameter(s) associated with the use of the smoking substitute device (10, 110);
either:
(a) assess the one or more usage parameter(s), and derive a recommended configuration of the smoking substitute device (10, 110), or
(b) transmit the one or more usage parameter(s) to an external device (2, 4), and receive from the external device (2, 4) a recommended configuration which has been derived from the one or more usage parameters;
present to a user of the smoking substitute device (10, 110) the recommended configuration of the smoking substitute device (10, 110) for authorisation prior to implementing the recommended configuration on the smoking substitute device (10, 110), wherein the one or more usage parameter(s) indicate that the user has drawn very heavily on the smoking substitute device (10, 110), and the recommended configuration includes increasing the voltage of the heater so that more nicotine is delivered per inhalation; and
upon the user authorising the recommended configuration, implement the recommended configuration on the smoking substitute device (10, 110).

13. A mobile device (2), comprising a processor and memory, the memory containing instructions which cause the processor to:
receive one or more usage parameter(s) from a smoking substitute device (10, 110) connected to the mobile device (2);
either:
(a) assess the one or more usage parameter(s), and derive a recommended configuration of the smoking substitute device (10, 110), or
(b) transmit the one or more usage parameter(s) to a remote server (4), and receive from the remote server (4) a recommended configuration which has been derived from the one or more usage parameters;
present to a user of the smoking substitute device (10, 110) the recommended configuration of the smoking substitute device (10, 110) for authorisation prior to implementing the recommended configuration on the smoking substitute device (10, 110), wherein the one or more usage parameter(s) indicate that the user has drawn very heavily on the smoking substitute device (10, 110), and the recommended configuration includes increasing the voltage of the heater so that more nicotine is delivered per inhalation; and
upon the user authorising the recommended configuration, transmit the recommended configuration to the smoking substitute device (10, 110) for implementation.

14. A remote server (4), comprising a processor and memory, the memory containing instructions which cause the processor to:
receive one or more usage parameter(s) from a smoking substitute device (10, 110) connected to the remote server (4);
assess the one or more usage parameter(s), and derive a recommended configuration of the smoking substitute device (10, 110);
present to a user of the smoking substitute device (10, 110) the recommended configuration of the smoking substitute device (10, 110) for authorisation prior to implementing the recommended configuration on the smoking substitute device (10, 110), wherein the one or more usage parameter(s) indicate that the user has drawn very heavily on the smoking substitute device (10, 110), and the recommended configuration includes increasing the voltage of the heater so that more nicotine is delivered per inhalation; and
upon the user authorising the recommended configuration, transmit the recommended configuration to the smoking substitute device (10, 110) for implementation.

## Patentansprüche

1. Computerimplementiertes Verfahren zum Anpassen einer Konfiguration einer Rauchersatzvorrichtung (10, 110), welche folgende Schritte umfasst:
Überwachen der Nutzung der Rauchersatzvorrichtung (10, 110) und Ableiten von einem oder mehreren Nutzungsparametern, welche(r) der Verwendung der Rauchersatzvorrichtung (10, 110) zugeordnet ist/sind, von der überwachten Nutzung;
Bewerten des einen oder der mehreren Nutzungsparameter(s), um basierend auf dem einen oder den mehreren Nutzungsparametern eine empfohlene Konfiguration der Rauchersatzvorrichtung (10, 110) abzuleiten;
Präsentieren der empfohlenen Konfiguration der Rauchersatzvorrichtung (10, 110) für einen Benutzer der Rauchersatzvorrichtung (10, 110) zur Autorisierung vor dem Implementieren der empfohlenen Konfiguration auf der Rauchersatzvorrichtung (10, 110), wobei der eine oder die mehreren Nutzungsparameter angibt/angeben, dass der Benutzer sehr stark auf der Rauchersatzvorrichtung (10, 110) angezogen hat, und wobei die empfohlene Konfiguration das Erhöhen der Spannung der Heizvorrichtung umfasst, sodass mehr Nikotin pro Inhalation abgegeben wird; und
beim Autorisieren der empfohlenen Konfiguration durch den Benutzer Implementieren der empfohlenen Konfiguration auf der Rauchersatzvorrichtung (10, 110).

2. Verfahren nach Anspruch 1, wobei der eine oder die mehreren Nutzungsparameter von der Rauchersatzvorrichtung (10, 110) an eine auf einer Mobilvorrichtung (2) installierte Anwendung übertragen wird/werden, wobei die Anwendung den einen oder die mehreren Nutzungsparameter bewertet, um die empfohlene Konfiguration abzuleiten.

3. Verfahren nach Anspruch 1, wobei der eine oder die mehreren Nutzungsparameter von der Rauchersatzvorrichtung (10, 110) an einen Fern-Server (4) übertragen wird/werden, wobei der Fern-Server (4) den einen oder die mehreren Nutzungsparameter bewertet, um die empfohlene Konfiguration abzuleiten.

4. Verfahren nach einem der vorangegangenen Ansprüche, wobei das Implementieren der empfohlenen Konfiguration das Ändern von einem oder mehreren Werten in einem Speicher (132) der Rauchersatzvorrichtung (10, 110) umfasst.

5. Verfahren nach einem der vorangegangenen Ansprüche, wobei das Ableiten der empfohlenen Konfiguration derart erfolgt, dass die Rauchersatzvorrichtung (10, 110) in einer Weise angepasst wird, welche ein Benutzererlebnis der Vorrichtung (10, 110) verbessert.

6. Verfahren nach einem der vorangegangenen Ansprüche, wobei der eine oder die mehreren Nutzungsparameter zumindest eines aus Folgenden umfasst/umfassen:
eine Gesamtnutzungszeit der Vorrichtung (10, 110) innerhalb eines gegebenen Zeitraums;
einen Batteriestand;
eine Angabe der Anzahl von Malen, die die Rauchersatzvorrichtung (10, 110) innerhalb eines gegebenen Zeitraums verwendet wird;
eine Angabe der Anzahl von Malen, eine Verbrauchsware (150) in die Rauchersatzware (10, 110) eingesetzt oder aus dieser entfernt wird.

7. Verfahren nach einem der vorangegangenen Ansprüche, wobei das Implementieren der empfohlenen Konfiguration der Rauchersatzvorrichtung (10, 110) das Einstellen eines Leistungspegels einer Heizvorrichtung in der Rauchersatzvorrichtung (10, 110) umfasst.

8. Verfahren nach einem der vorangegangenen Ansprüche, wobei das Implementieren der empfohlenen Konfiguration der Rauchersatzvorrichtung (10, 110) das Ändern von einer oder mehreren Einstellungen der Rauchersatzvorrichtung (10, 110) aus folgender Liste umfasst:
eine Leistung, die für eine Heizvorrichtung der Rauchersatzvorrichtung (10, 110) bereitgestellt wird;
ein Leistungsprofil über einen Inhalationszeitraum; und
ein Leistungsprofil, das einer Klasse von Verbrauchswaren (150) zugeordnet ist.

9. Verfahren nach einem der vorangegangenen Ansprüche, ferner umfassend folgende Schritte, die auf der Rauchersatzvorrichtung (10, 110) implementiert werden:
Erhalten eines Identifikators einer Verbrauchsware (150), die mit der Rauchersatzvorrichtung (10, 110) verbunden ist;
Bestimmen einer zugeordneten empfohlenen Konfiguration der Rauchersatzvorrichtung (10, 110), die in einem Speicher (132) der Rauchersatzvorrichtung (10, 110) gespeichert ist, unter Verwendung des Identifikators; und
Implementieren der zugeordneten empfohlenen Konfiguration auf der Rauchersatzvorrichtung (10, 110).

10. Verfahren nach einem der vorangegangenen Ansprüche, ferner umfassend folgende Schritte, die auf der Rauchersatzvorrichtung (10, 110) implementiert werden:
Erhalten eines Identifikators einer Verbrauchsware, die mit der Rauchersatzvorrichtung (10, 110) verbunden ist;
Bestimmen, dass keine zugeordnete empfohlene Konfiguration der Rauchersatzvorrichtung (10, 110), die in einem Speicher (132) der Rauchersatzvorrichtung (10, 110) gespeichert ist, vorhanden ist, unter Verwendung des Identifikators; und
Implementieren einer Standardmoduskonfiguration auf der Rauchersatzvorrichtung (10, 110).

11. Verfahren nach einem der vorangegangenen Ansprüche, wobei
das Bewerten des einen oder der mehreren Nutzungsparameter(s) das Vergleichen des einen oder der mehreren Nutzungsparameter(s) mit einer Vielzahl von gespeicherten Beispielsnutzungsparametern und das Identifizieren eines Typs von Benutzer der Vorrichtung (10, 110) anhand des Vergleichs umfasst und wobei
das Ableiten der empfohlenen Konfiguration der Rauchersatzvorrichtung (10, 110) durch Auswählen einer entsprechenden empfohlenen Konfiguration, welche dem identifizierten Typ von Benutzer zugeordnet ist, erfolgt.

12. Rauchersatzvorrichtung (10, 110), umfassend einen Prozessor und einen Speicher (132), wobei der Speicher (132) Befehle enthält, die bewirken, dass der Prozessor:
die Nutzung der Rauchersatzvorrichtung (10, 110) überwacht und einen oder mehrere Nutzungsparameter, welche(r) der Verwendung der Rauchersatzvorrichtung (10, 110) zugeordnet ist/sind, von der überwachten Nutzung ableitet;
entweder:
(a) den einen oder die mehreren Nutzungsparameter bewertet und eine empfohlene Konfiguration der Rauchersatzvorrichtung (10, 110) ableitet; oder
(b) den einen oder die mehreren Nutzungsparameter an eine externe Vorrichtung (2, 4) überträgt und von der externen Vorrichtung (2, 4) eine empfohlene Konfiguration empfängt, die von dem einen oder den mehreren Nutzungsparametern abgeleitet wurde;
die empfohlene Konfiguration der Rauchersatzvorrichtung (10, 110) für einen Benutzer der Rauchersatzvorrichtung (10, 110) zur Autorisierung vor dem Implementieren der empfohlenen Konfiguration auf der Rauchersatzvorrichtung (10, 110) präsentiert, wobei der eine oder die mehreren Nutzungsparameter angibt/angeben, dass der Benutzer sehr stark auf der Rauchersatzvorrichtung (10, 110) angezogen hat, und wobei die empfohlene Konfiguration das Erhöhen der Spannung der Heizvorrichtung umfasst, sodass mehr Nikotin pro Inhalation abgegeben wird; und
beim Autorisieren der empfohlenen Konfiguration durch den Benutzer die empfohlene Konfiguration auf der Rauchersatzvorrichtung (10, 110) implementiert.

13. Mobilvorrichtung (2), umfassend einen Prozessor und einen Speicher, wobei der Speicher Befehle enthält, die bewirken, dass der Prozessor:
einen oder mehrere Nutzungsparameter von einer mit der Mobilvorrichtung (2) verbundenen Rauchersatzvorrichtung (10, 110) empfängt;
entweder:
(a) den einen oder die mehreren Nutzungsparameter bewertet und eine empfohlene Konfiguration der Rauchersatzvorrichtung (10, 110) ableitet; oder
(b) den einen oder die mehreren Nutzungsparameter an einen Fern-Server (4) überträgt und von dem Fern-Server (4) eine empfohlene Konfiguration empfängt, die von dem einen oder den mehreren Nutzungsparametern abgeleitet wurde;
die empfohlene Konfiguration der Rauchersatzvorrichtung (10, 110) für einen Benutzer der Rauchersatzvorrichtung (10, 110) zur Autorisierung vor dem Implementieren der empfohlenen Konfiguration auf der Rauchersatzvorrichtung (10, 110) präsentiert, wobei der eine oder die mehreren Nutzungsparameter angibt/angeben, dass der Benutzer sehr stark auf der Rauchersatzvorrichtung (10, 110) angezogen hat, und wobei die empfohlene Konfiguration das Erhöhen der Spannung der Heizvorrichtung umfasst, sodass mehr Nikotin pro Inhalation abgegeben wird; und
beim Autorisieren der empfohlenen Konfiguration die empfohlene Konfiguration zur Implementierung an die Rauchersatzvorrichtung (10, 110) überträgt.

14. Fern-Server (4), umfassend einen Prozessor und einen Speicher, wobei der Speicher Befehle enthält, die bewirken, dass der Prozessor:
einen oder mehrere Nutzungsparameter von einer mit dem Fern-Server (4) verbundenen Rauchersatzvorrichtung (10, 110) empfängt;
den einen oder die mehreren Nutzungsparameter bewertet und eine empfohlene Konfiguration der Rauchersatzvorrichtung (10, 110) ableitet;
die empfohlene Konfiguration der Rauchersatzvorrichtung (10, 110) für einen Benutzer der Rauchersatzvorrichtung (10, 110) zur Autorisierung vor dem Implementieren der empfohlenen Konfiguration auf der Rauchersatzvorrichtung (10, 110) präsentiert, wobei der eine oder die mehreren Nutzungsparameter angibt/angeben, dass der Benutzer sehr stark auf der Rauchersatzvorrichtung (10, 110) angezogen hat, und wobei die empfohlene Konfiguration das Erhöhen der Spannung der Heizvorrichtung umfasst, sodass mehr Nikotin pro Inhalation abgegeben wird; und
beim Autorisieren der empfohlenen Konfiguration die empfohlene Konfiguration zur Implementierung an die Rauchersatzvorrichtung (10, 110) überträgt.

## Revendications

1. Procédé mis en œuvre par ordinateur pour adapter une configuration d'un dispositif à fumer de substitution (10, 110), qui inclut les étapes consistant à :
surveiller l'utilisation du dispositif à fumer de substitution (10, 110), et déduire de l'utilisation surveillée un ou plusieurs paramètres d'utilisation associés à l'utilisation du dispositif à fumer de substitution (10, 110) ;
évaluer les un ou plusieurs paramètres d'utilisation pour déduire, sur la base des un ou plusieurs paramètres d'utilisation, une configuration recommandée du dispositif à fumer de substitution (10, 110) ;
présenter à un utilisateur du dispositif à fumer de substitution (10, 110) la configuration recommandée du dispositif à fumer de substitution (10, 110) pour autorisation avant de mettre en œuvre la configuration recommandée sur le dispositif à fumer de substitution (10, 110), dans lequel les un ou plusieurs paramètres d'utilisation indiquent que l'utilisateur a très fortement tiré sur le dispositif à fumer de substitution (10, 110), et la configuration recommandée comprend l'augmentation de la tension de l'élément chauffant afin que davantage de nicotine soit administrée par inhalation ; et
lorsque l'utilisateur autorise la configuration recommandée, mettre en œuvre la configuration recommandée sur le dispositif à fumer de substitution (10, 110).

2. Procédé selon la revendication 1, dans lequel les un ou plusieurs paramètres d'utilisation sont transmis à partir du dispositif à fumer de substitution (10, 110) à une application installée sur un dispositif mobile (2), ladite application évaluant les un ou plusieurs paramètres d'utilisation pour déduire la configuration recommandée.

3. Procédé selon la revendication 1, dans lequel les un ou plusieurs paramètres d'utilisation sont transmis depuis le dispositif à fumer de substitution (10, 110) à un serveur distant (4), ledit serveur distant (4) évaluant les un ou plusieurs paramètres d'utilisation pour déduire la configuration recommandée.

4. Procédé selon l'une quelconque des revendications précédentes, dans lequel la mise en œuvre de la configuration recommandée inclut un changement d'une ou plusieurs valeurs dans une mémoire (132) du dispositif à fumer de substitution (10, 110).

5. Procédé selon l'une quelconque des revendications précédentes, dans lequel la déduction de la configuration recommandée est effectuée de manière à adapter le dispositif à fumer de substitution (10, 110) d'une manière qui améliore l'expérience d'un utilisateur du dispositif (10, 110).

6. Procédé selon l'une quelconque des revendications précédentes, dans lequel les un ou plusieurs paramètres d'utilisation incluent au moins un parmi :
un temps d'utilisation total du dispositif (10, 110) dans une période de temps donnée ;
un niveau de batterie ;
une indication du nombre de fois que le dispositif à fumer de substitution (10, 110) a été utilisé au cours d'une période de temps donnée ;
une indication du nombre de fois qu'un consommable (150) a été inséré dans le dispositif à fumer de substitution (10, 110), ou retiré de celui-ci.

7. Procédé selon l'une quelconque des revendications précédentes, dans lequel la mise en œuvre de la configuration recommandée du dispositif à fumer de substitution (10, 110) inclut un réglage d'un niveau de puissance d'un élément chauffant dans le dispositif à fumer de substitution (10, 110).

8. Procédé selon l'une quelconque des revendications précédentes, dans lequel la mise en œuvre de la configuration recommandée du dispositif à fumer de substitution (10, 110) inclut une modification d'un ou de plusieurs réglages du dispositif à fumer de substitution (10, 110) de la liste suivante :
une puissance fournie à un élément chauffant du dispositif à fumer de substitution (10, 110) ;
un profil de puissance sur une période d'inhalation ; et
un profil de puissance associé à une classe de consommables (150).

9. Procédé selon l'une quelconque des revendications précédentes, incluant en outre les étapes, mises en œuvre sur le dispositif à fumer de substitution (10, 110), consistant à :
obtenir un identifiant d'un consommable (150) connecté au dispositif à fumer de substitution (10, 110) ;
déterminer, en utilisant l'identifiant, une configuration recommandée associée du dispositif à fumer de substitution (10, 110) stockée dans la mémoire (132) du dispositif à fumer de substitution (10, 110) ; et
mettre en œuvre la configuration recommandée associée sur le dispositif à fumer de substitution (10, 110).

10. Procédé selon l'une quelconque des revendications précédentes, comprenant en outre les étapes, mises en œuvre sur le dispositif à fumer de substitution (10, 110), consistant à :
obtenir un identifiant d'un consommable connecté au dispositif à fumer de substitution (10, 110) ;
déterminer, en utilisant l'identifiant, qu'il n'y a pas de configuration recommandée associée du dispositif à fumer de substitution (10, 110) stockée dans la mémoire (132) du dispositif à fumer de substitution (10, 110) ; et
mettre en œuvre une configuration de mode par défaut sur le dispositif à fumer de substitution (10, 110).

11. Procédé selon l'une quelconque des revendications précédentes, dans lequel :
l'évaluation des un ou plusieurs paramètres d'utilisation inclut une comparaison des un ou plusieurs paramètres d'utilisation à une pluralité d'exemples de paramètres d'utilisation stockés, et une identification d'un type d'utilisateur du dispositif (10, 110) à partir de ladite comparaison, et
la déduction de la configuration recommandée du dispositif à fumer de substitution (10, 110) est effectuée en sélectionnant une configuration recommandée correspondante associée au type d'utilisateur identifié.

12. Dispositif à fumer de substitution (10, 110), comprenant un processeur et une mémoire (132), la mémoire (132) contenant des instructions qui amènent le processeur à :
surveiller l'utilisation du dispositif à fumer de substitution (10, 110), et déduire de l'utilisation surveillée un ou plusieurs paramètres d'utilisation associés à l'utilisation du dispositif à fumer de substitution (10, 110) ;
soit :
(a) évaluer les un ou plusieurs paramètres d'utilisation et déduire une configuration recommandée du dispositif à fumer de substitution (10, 110), soit
(b) transmettre les un ou plusieurs paramètres d'utilisation à un dispositif externe (2, 4), et recevoir du dispositif externe (2, 4) une configuration recommandée qui a été déduite à partir des un ou plusieurs paramètres d'utilisation ;
présenter à un utilisateur du dispositif à fumer de substitution (10, 110) la configuration recommandée du dispositif à fumer de substitution (10, 110) pour autorisation avant de mettre en œuvre la configuration recommandée sur le dispositif à fumer de substitution (10, 110), dans lequel les un ou plusieurs paramètres d'utilisation indiquent que l'utilisateur a très fortement tiré sur le dispositif à fumer de substitution (10, 110), et la configuration recommandée comprend une augmentation de la tension de l'élément chauffant afin que davantage de nicotine soit administrée par inhalation ; et
lorsque l'utilisateur autorise la configuration recommandée, mettre en œuvre la configuration recommandée sur le dispositif à fumer de substitution (10, 110).

13. Dispositif mobile (2), comprenant un processeur et une mémoire, la mémoire contenant des instructions qui amènent le processeur à :
recevoir un ou plusieurs paramètres d'utilisation à partir d'un dispositif à fumer de substitution (10, 110) connecté au dispositif mobile (2) ;
soit :
(a) évaluer les un ou plusieurs paramètres d'utilisation et déduire une configuration recommandée du dispositif à fumer de substitution (10, 110), soit
(b) transmettre les un ou plusieurs paramètres d'utilisation à un serveur distant (4), et recevoir du serveur distant (4) une configuration recommandée qui a été déduite des un ou plusieurs paramètres d'utilisation ;
présenter à un utilisateur du dispositif à fumer de substitution (10, 110) la configuration recommandée du dispositif à fumer de substitution (10, 110) pour autorisation avant de mettre en œuvre la configuration recommandée sur le dispositif à fumer de substitution (10, 110), dans lequel les un ou plusieurs paramètres d'utilisation indiquent que l'utilisateur a très fortement tiré sur le dispositif à fumer de substitution (10, 110), et la configuration recommandée comprend une augmentation de la tension de l'élément chauffant afin que davantage de nicotine soit administrée par inhalation ; et
dès que l'utilisateur autorise la configuration recommandée, transmettre la configuration recommandée au dispositif à fumer de substitution (10, 110) pour une mise en œuvre.

14. Serveur distant (4), comprenant un processeur et une mémoire, la mémoire contenant des instructions qui amènent le processeur à :
recevoir un ou plusieurs paramètres d'utilisation à partir d'un dispositif à fumer de substitution (10, 110) connecté au serveur distant (4) ;
évaluer les un ou plusieurs paramètres d'utilisation, et déduire une configuration recommandée du dispositif à fumer de substitution (10, 110) ;
présenter à un utilisateur du dispositif à fumer de substitution (10, 110) la configuration recommandée du dispositif à fumer de substitution (10, 110) pour autorisation avant de mettre en œuvre la configuration recommandée sur le dispositif à fumer de substitution (10, 110), dans lequel les un ou plusieurs paramètres d'utilisation indiquent que l'utilisateur a très fortement tiré sur le dispositif à fumer de substitution (10, 110), et la configuration recommandée comprend une augmentation de la tension de l'élément chauffant afin que davantage de nicotine soit administrée par inhalation ; et
dès que l'utilisateur autorise la configuration recommandée, transmettre la configuration recommandée au dispositif à fumer de substitution (10, 110) pour une mise en œuvre.
